# EUROPÄISCHE PATENTSCHRIFT

(11) **EP 2 079 982 B1**
(45) Veröffentlichungstag und Bekanntmachung des Hinweises auf die Patenterteilung: **17.02.2010**
(21) Anmeldenummer: 07820445.0
(22) Anmeldetag: 21.09.2007
(51) Int. Cl.: G01B 11/275

(54) **VERFAHREN ZUM ERMITTELN DER DREHACHSE EINES FAHRZEUGRADES**
METHOD FOR DETERMINING THE AXIS OF ROTATION OF A VEHICLE WHEEL
PROCÉDÉ POUR DÉTERMINER L'AXE DE ROTATION D'UNE ROUE D'UN VÉHICULE

(30) Priorität: 16.10.2006 DE 102006048725
(43) Veröffentlichungstag der Anmeldung: 22.07.2009
(73) Patentinhaber: Robert Bosch GmbH, 70442 Stuttgart (DE)
(72) Erfinder: ABRAHAM, Steffen, 31134 Hildesheim (DE); HAJA, Andreas, 30453 Hannover (DE); KNOLL, Christian, 70376 Stuttgart (DE); KALLMANN, Ulrich, 72076 Tuebingen (DE); HAPPOLD, Walter, 74199 Untergruppenbach (DE)
(86) Internationale Anmeldenummer: PCT/EP2007/060018
(87) Internationale Veröffentlichungsnummer: WO 2008/046715

(56) Entgegenhaltungen:
- WO-A-2005/090906
- WO-A-2006/130694
- JP-A- 9 280 843
- US-A- 4 745 469

## Beschreibung

### Stand der Technik

Die Erfindung bezieht sich auf ein Verfahren zum Ermitteln der Drehachse eines Fahrzeugrades, bei dem während der Drehung des Rades ein Lichtmuster zumindest auf das Rad projiziert und das von dem Rad reflektierte Lichtmuster von einer kalibrierten bildgebenden Sensorik aufgenommen und in einer Auswerteeinrichtung ausgewertet wird.

Ein Verfahren und eine entsprechende Vorrichtung dieser Art ist in der US 4,745,469 angegeben, wobei auf der Basis der ermittelten Drehachse eine Achsvermessung durchgeführt wird, insbesondere der Spur- und Sturzwinkel ermittelt werden, während sich das Fahrzeug auf einem Rollenprüfstand befindet. Mittels eines Projektionssystems werden Laserlinien oder andere Muster auf das Rad bzw. den Reifen projiziert. Mittels Kameras werden die Muster abgebildet, und über eine Triangulation werden aus den Kamerakoordinaten und der bekannten Anordnung der Kameras bezüglich des Projektors die 3D-Koordinaten auf der Oberfläche rekonstruiert und hieraus die Lage des Rades ermittelt, woraus dann letztlich Spur und Sturz bestimmt werden. Diese berührungslose, optische Messung erfolgt, während sich das Rad in dem Rollenprüfstand ortsfest um seine Drehachse dreht.

Auch in der DE 103 35 829 A1 ist ein Verfahren zur Bestimmung der Achsgeometrie angegeben, bei dem ein Lichtmuster stirnseitig auf das Rad projiziert und das von der Stirnseite des Rades reflektierte Licht aus einer anderen Richtung als der Projektionsrichtung durch einen Bildwandler aufgenommen wird, wobei eine flächige Projizierung des Lichts und eine flächige Aufnahme des von dem Rad reflektierten Lichts während der Drehung des Rades vorgesehen sind, um den Normalenvektor des Rades bzw. eine Referenzebene trotz auf üblichen Rädern vorhandenen Unebenheiten möglichst genau und robust zu bestimmen. Die Ermittlung der Referenzebene bzw. des damit zusammenhängenden Normalenvektors findet an einem rotierenden Rad statt, das mindestens eine volle Umdrehung ausführt. Als projiziertes Lichtmuster wird beispielsweise ein Streifenmuster, eine monochrome Gitterstruktur oder ein zweidimensionales Farbmuster eingesetzt.

Auch in der DE 10 2005 063 082 A1 und der DE 10 2005 063 083 A1 sind Verfahren zur optischen Fahrwerksvermessung angegeben, bei denen strukturiertes Licht auf das Rad und auch auf dieses umgebende Karosseriebereiche projiziert und mittels einer bildgebenden Sensorik aufgenommen wird.

Bei anderen Verfahren und Vorrichtungen zum Ermitteln der Drehachse und Vermessen der Achsgeometrie wird das Fahrzeugrad mit einem Mono- oder einem Stereo-Kamerasystem beobachtet, wie z.B. in der EP 0 895 056 A2 und der DE 29 48 573 A1 gezeigt. Im Grauwertbild der Kameraabbildung werden markante Merkmale, wie z.B. der Felgenrand, lokalisiert. Aus der geometrischen Lage des Felgenrandes oder anderer Merkmale im Bild wird deren Lage im Raum und daraus Spur bzw. Sturz errechnet. Ein derartiges Messverfahren ist auch in der DE 10 2004 013 441 A1 ausgeführt, wobei zum Ermitteln der Rotationsachse des Rades ein 3D-Modell eingepasst wird. Bei der Messung werden z.B. auch Stereobilder der Radfelge aufgenommen und die Winkellage des Ventils festgestellt. In der (nicht vorveröffentlichten) DE 10 2005 017 624.0 ist ausgeführt, Radmerkmale und/oder Karosseriemerkmale über die Ermittlung einer 3D-Punktwolke zu gewinnen, um daraus die Rad- und/oder Achsgeometrie von Fahrzeugen zu bestimmen, wobei Aufnahmen des rotierenden Rades insbesondere auch während einer Vorbeifahrt des Fahrzeuges erfolgen.

Auch gibt es Verfahren, bei denen anstelle vorhandener Radmerkmale mit mechanischen Hilfsmitteln besondere Markierungen angebracht werden, wie z.B. in der DE 100 32 356 A1 gezeigt. Zwar ergeben derartige Markierungen für die Messung und Auswertung gut erfassbare Strukturen an dem Rad, sie erfordern jedoch zusätzlichen Aufwand.

WO-A-2005 090 906 beschreibt ein Verfahren zum ermitteln der Drehachse eines Fahrzeugrades, bei dem das gleichmäßig beleuchtete Rad während dessen Drehung von einer Kamera erfaßt wird. Bei der Auswertung wird die von der Kamera aufgenommene Bildpunktwolke an ein parametrisches Oberflächenmodell des Rades angepasst. Daraus wird für verschiedene Drehlagen des Rades der Normalenvektor des Rades berechnet und aus diesen Normalenvektoren die Drehachse des Rades bestimmt.

Hingegen ist es bei bisherigen Verfahren und Vorrichtung ohne besondere Markierungen oder mit projiziertem Licht schwierig, exakte und zuverlässige, robuste Messungen der Achs- bzw. Radgeometrie und der Drehachse eines Fahrzeugrades insbesondere unter den rauen Messbedingungen eines Werkstattprüfplatzes und unter der Auflage einer möglichst einfachen Durchführung der Messung zu erhalten.

Der Erfindung liegt die Aufgabe zugrunde, ein Verfahren zum Ermitteln der Drehachse eines Fahrzeugrades und daraus gegebenenfalls der Achs- bzw. Radgeometrie bereit zu stellen, mit dem bei möglichst geringem Aufwand möglichst exakte, zuverlässige Messwerte erhalten werden.

### Offenbarung der Erfindung

### Vorteile der Erfindung

Diese Aufgabe wird mit den Merkmalen des Anspruches 1 gelöst. Hierbei ist vorgesehen, dass bei der Auswertung eine radbezogene 3D-Punktwolke bestimmt und an diese ein parametrisches Oberflächenmodell des Rades angepasst wird, dass zum Erhalten der Radachsen Radnormalenvektoren für verschiedene Drehlagen des Rades berechnet werden und dass aus der räumlichen Bewegung des Radnormalenvektors der Drehachsvektor als Drehachse berechnet wird. Mit der durch die Projektion der Lichtmuster bewirkten strukturieren Beleuchtung des Rades und der Auswertung mittels einer 3D-Punktwolke und Anpassung eines parametrischen Oberflächenmodells des Rades können die Radnormalenvektoren bei der Drehung des Rades ohne aufwändigen mechanischen Messaufbau und bei einfacher Messdurchführung berechnet und daraus die Drehachse ermittelt werden. Auf der Basis der ermittelten Drehachse können dann insbesondere Achs- bzw. Radgeometriedaten exakt und zuverlässig gewonnen werden.

Vorteilhafte Ausgestaltungen des Verfahrens bestehen darin, dass das reflektierte Lichtmuster mittels eines Mono-, Stereo- oder Mehrkamerasystems der bildgebenden Sensorik aufgenommen wird und dass bei Stereo-Aufnahme eine Korrespondenzzuordnung von mit den beiden Kamerabildern erhaltenen Messpunkten erfolgt und aus der Stereokorrespondenz und den Kalibrierdaten die 3D-Koordinaten des jeweiligen Messpunktes errechnet werden.

Eine erhöhte Genauigkeit wird dabei dadurch erreicht, dass als Oberflächenmodell zur Formkompensation ein deformierbares Modell für die Anpassung zugrunde gelegt wird.

Zu einer einfachen, schnellen Messung tragen die Maßnahmen bei, dass die Projektion des Lichtmusters und die Aufnahme durch die bildgebende Sensorik während der Vorbeifahrt des Fahrzeuges erfolgen.

Eine für die Messung und Auswertung günstige Vorgehensweise ergibt sich dadurch, dass für mehrere Radpositionen die korrespondierenden Radachsen berechnet und zusätzlich die räumlichen Positionen der Radmittelpunkte bestimmt werden, dass die Radmittelpunkte und die zugehörigen Radachsen in ein gemeinsames Zentrum verschoben werden und dass die Drehachse als Achse des entstehenden Kegels bzw. Kegelstumpfes identifiziert wird.

Für eine einfache Messung ist des Weiteren vorteilhaft vorgesehen, dass die Bewegung des Fahrzeuges während der Vorbeifahrt durch Erfassen der Bewegung der Karosserie dreidimensional bestimmt wird.

Dabei besteht eine vorteilhafte Vorgehensweise bei der Messung und Auswertung darin, dass durch die Vorbeifahrt entstehende Translationsverschiebungen der Radnormalenvektoren aus der Bewegungsrichtung und Geschwindigkeit der angepassten 3D-Punktwollcen für jedes aufgenommene Bild bestimmt werden, dass die Spiralengänge der Radnormalenvektoren unter Herausrechnen der Translationsverschiebungen in sich zu einer umlaufenden Kurve zusammengeschoben werden und dass als Drehachsenvektor der Normalenvektor zu der von der umlaufenden Kurve umschriebenen ebenen Fläche durch deren Mittelpunkt ermittelt wird.

Zur Zuverlässigkeit der Messergebnisse tragen des Weiteren die Maßnahmen bei, dass zur Erhöhung der Genauigkeit der Positionsbestimmung der betreffenden Radnormatenvektoren die Drehfrequenz und daraus der Drehwinkel aus dem Geschwindigkeitsvektor und dem Radius eines zugehörigen segmentierten Radobjektes bestimmt wird.

Weitere vorteilhafte Maßnahmen bestehen darin, dass aus dem bei der Bewegung des Rades und gegebenenfalls Fahrzeugs ermittelten Drehachsenvektor und einem am ruhenden Rad gewonnenen Messwert des Radnormalenvektors Spur- und Sturzwinkel berechnet werden.

Verschiedene weitere Ausgestaltungsmöglichkeiten des Verfahrens ergeben sich dadurch, dass als Oberflächenmodell zum Einpassen in die Punktwolke ein Zylinder oder idealisiertes Rad zugrunde gelegt wird.

### Kurze Beschreibung der Zeichnungen

Die Erfindung wird nachfolgend anhand von Ausführungsbeispielen unter Bezugnahme auf die Zeichnungen näher erläutert. Es zeigen:
- Fig. 1: eine schematische Ansicht einer Messeinrichtung in einer Messumgebung zum Bestimmen der Drehachse eines Fahrzeugs,
- Fig. 2: ein projiziertes Lichtmuster,
- Fig. 3: ermittelte radbezogene 3D-Punktewolken bei verschiedenen Aufnahmerichtungen und sich daraus ergebenden Neigungswinkeln,
- Fig. 4: eine schematische Darstellung zum Zusammenhang von Radachse und ermittelter Drehachse,
- Fig. 5: eine Darstellung zur Translation der Radachsvektoren entlang einer Geraden,
- Fig. 6: Darstellung einer Spiralbahn durch die Normalenvektoren eines segmentierten 3D-Radobjektes zu aufeinander folgenden Bildern einer Bildsequenz und
- Fig. 7: eine Komprimierung der Spiralbahn nach Fig. 6 durch Verschiebung entlang der durch die Bewegung des Fahrzeugs bewirkten Translation.

### Ausführungsformen der Erfindung

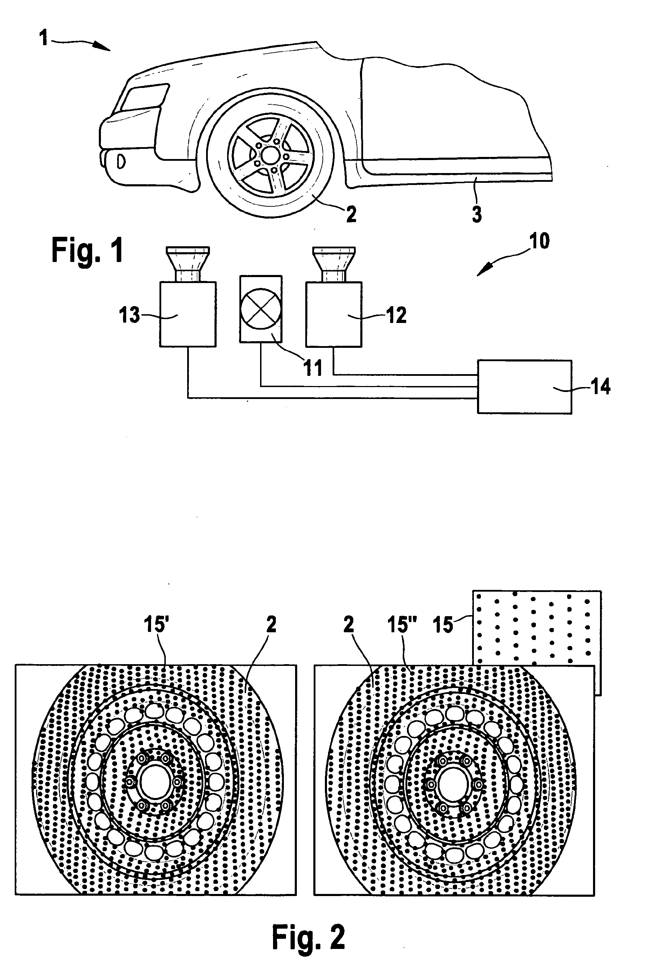

Fig. 1 zeigt eine Messumgebung zum Ermitteln der Drehachse eines Fahrzeugrades 2 mittels einer Messeinrichtung 10, wobei sich das Fahrzeug 1 an der Messeinrichtung 10 vorbei bewegen kann. Außer dem Rad 2 kann auch die Karosserie 3 vorzugsweise in der Umgebung des Rades 2 mit in die Messung einbezogen werden.

Die Messeinrichtung 10 weist eine Projektionseinrichtung 11 für Lichtmuster 15 (vgl. Fig. 2) und zwei in vorgegebener räumlicher Lage und Richtung zu dieser angeordneten bildgebenden Sensoreinheiten 12, 13 sowie eine Steuereinheit 14 auf, die zur Datenübertragung mit der Projektionseinrichtung 11 und dem in Stereoanordnung positionierten bildgebenden Sensoreinheiten 12, 13 verbunden ist und elektronische Einrichtungen für die Steuerung der Projektionseinrichtung 11, der bildgebenden Sensoreinheiten 12, 13 und gegebenenfalls weiterer angeschlossener Komponenten und für eine Auswertung der Daten und Darstellung der Messergebnisse aufweist.

Fig. 2 zeigt außer dem Lichtmuster 15 die sich aus Sicht der beiden bildgebenden Sensoreinheiten 12, 13, nämlich der linken und rechten Stereokamera, ergebenden, von dem Rad reflektierten Lichtmuster 15' bzw. 15", wobei die linienhafte Anordnung der Lichtpunkte bei den beiden Aufnahmen unterschiedlich gekrümmt sind. Bei dem Lichtmuster handelt es sich beispielsweise um ein Laserpunktemuster.

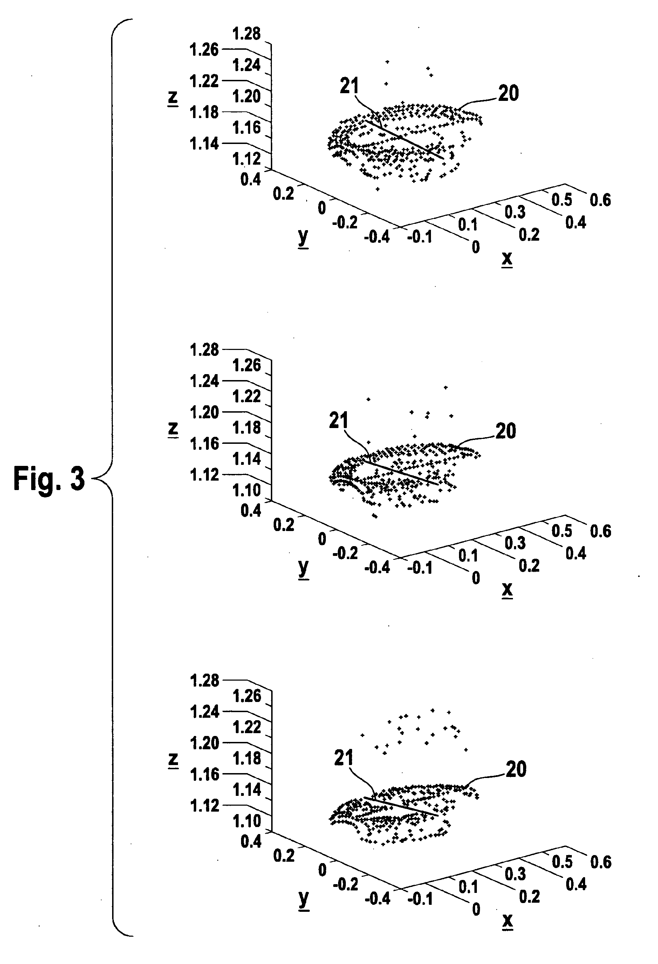

Fig. 3 zeigt die Bestimmung von radbezogenen 3D-Punktewolken 20 aus dem Stereoverschiebungsvektor für verschiedene Neigungswinkel entlang Neigungslinien 21 bezüglich der bildgebenden Sensoreinheiten 12, 13, nämlich bei einem Neigungswinkel von 0°, 1° bzw. 2° bei dem linken, mittleren bzw. rechten Teilbild.

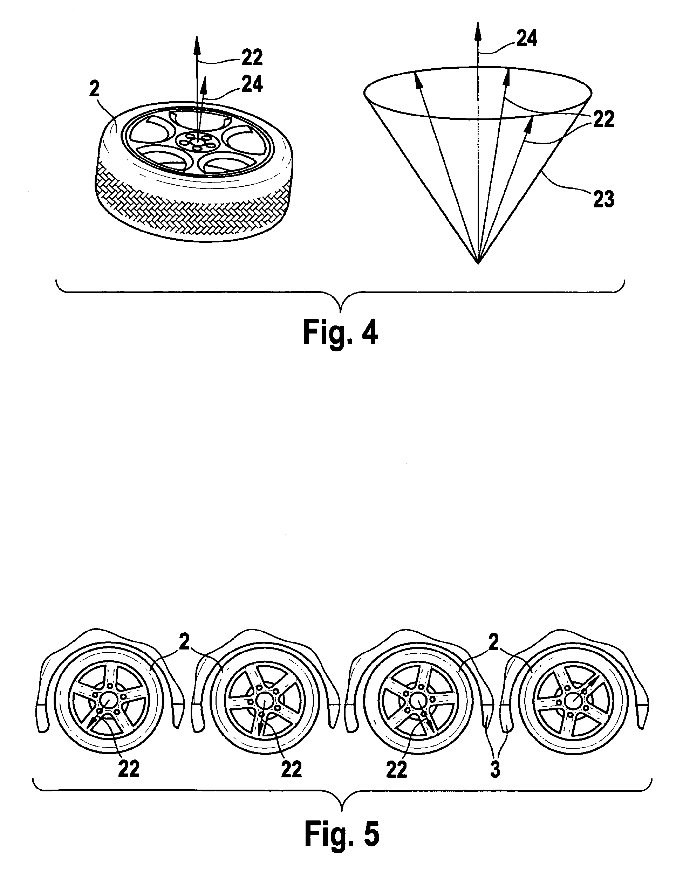

In Fig. 4 sind während der Messung erhaltene unterschiedliche Radachsen, die auf einem Kegelmantel liegen, sowie die daraus ermittelte Drehachse dargestellt, und zwar als Radachsvektor 22, Radachskegel 23 und Drehachsvektor 24.

Wie Fig. 5 zeigt, ergibt sich während der Vorbeifahrt des Fahrzeugs 1 eine Translation der Radachsvektoren 22 (in vereinfachter Annahme) entlang einer Geraden, im Allgemeinen jedoch auf gekrümmter Bahn.

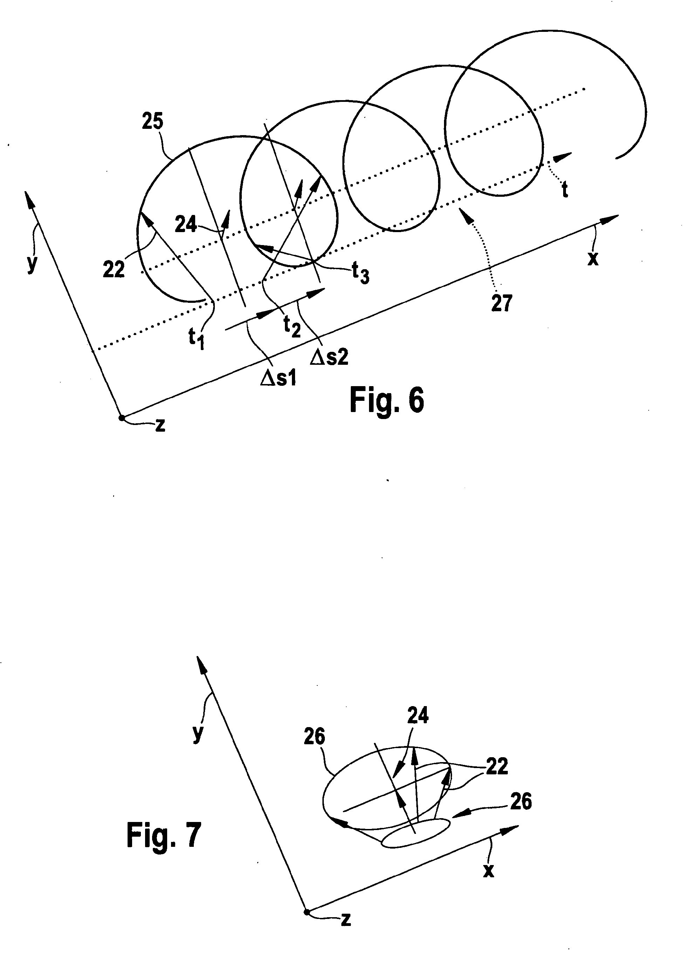

Wie aus Fig. 6 ersichtlich, beschreiben die Normalenvektoren eines segmentierten 3D-Radobjektes über die Bilder einer Bildsequenz zu Zeiten t₁, t₂, t₃ usw. gesehen eine Spiralbahn 25, wobei eine Radmittelpunktstrajektorie 27 durch die Bewegung des Fahrzeugs 1 während der Vorbeifahrt zustande kommt. Die drei Raumrichtungen sind mit x, y, z und die Verschiebung ist mit Δs1, Δs2 bezeichnet. Durch Verschiebung der Spiralbögen um die Verschiebung Δs ergibt sich eine Komprimierung der Spirale zu einer Komprimierungsellipse 26, wie in Fig. 7 gezeigt.

Die Messeinrichtung 10 ist dazu ausgebildet, eine exakte, robuste Messung durchzuführen und die Drehachse des Fahrzeugrades 2 zu ermitteln und gegebenenfalls weitere Achs- bzw. Radgeometriedaten zu bestimmen. Durch die Projektion von Lichtmustern 15 ist das Verfahren unabhängig von Referenzpunkten, die fest mit der Radoberfläche bzw. Radtextur verknüpft sind und mit dieser bei Bewegung mitwandern. Daher müssen Strukturen auf der Radoberfläche auch nicht erkannt werden. Vielmehr werden durch die strukturierte Beleuchtung mittels der Lichtmuster stabile Merkmale erzeugt, die nicht ortsfest mit der Radoberfläche verbunden sind und daher bei Bewegung des Rades 2 nicht mitwandern. Andererseits ist dadurch, insbesondere bei Bewegung des Fahrzeugs in Vorbeifahrt an der Messeinrichtung 10, die Bestimmung der Drehachse des Rades nicht ohne Weiteres möglich. Bisher bekannte Verfahren mit strukturierter Beleuchtung basieren auf einer ortsfesten Rotation des Rades um seine Drehachse, insbesondere auf einem Rollenprüfstand.

Bei dem hier vorgestellten Verfahren wird die Lage der Drehachse insbesondere auch in der Vorbeifahrt des Fahrzeugs 1 relativ zu der Messeinrichtung 10 ermöglicht. Die Notwendigkeit einer ortsfesten Rotation des Rades (Rollenprüfstand oder das Ausheben des Fahrzeuges) entfällt. Aus der bekannten Lage der Drehachsen kann anschließend die Achsgeometrie, wie Spur und Sturz, errechnet werden. Dabei wird auch eine Felgenschlagskompensation durchgeführt.

Die Projektion der Lichtmuster 15, beispielsweise Lichtpunkte, Lichtschnitte oder Textur, auf das Rad bei der Vorbeifahrt des Fahrzeuges unter 3D-Messung der strukturierten Beleuchtung mittels eines oder mehrerer bildgebender Sensoreinheiten 12 in Form eines Mono-, Stereo- oder Mehrkamerasystems ermöglicht eine genaue und robuste Berechnung der Lage der Drehachse des Rades 2 bezogen auf die Radoberfläche, wobei die algorithmische Auswertung der Messdaten über die Bestimmung einer 3D-Punktwolke 20 erfolgt. Die strukturierte Beleuchtung macht eine stabile Auswertung weitestgehend unabhängig von den Oberflächeneigenschaften der Felge und des Reifens.

Bei der Durchführung des Verfahrens erfolgt zu jedem Zeitschritt eine Projektion des Musters und hieraus die Berechnung einer 3D-Punktwolke 20. Das parametrische Oberflächenmodell des Rades 2 wird in die 3D-Punktwolke 20 eingepasst. Es ergibt sich ein Radzentrum und ein Radnormalenvektor. Über den gesamten Zeitraum der Messung während der Vorbeifahrt wird aus der räumlichen Bewegung der Radzentren und der Radnormalvektoren die räumliche Lage der Drehachse in einem globalen Koordinatensystem und bezüglich der Radoberfläche bestimmt. Die räumliche Lage der Drehachse des Rades 2 in dem globalen Koordinatensystem dient z.B. der Spur- und Sturzberechnung. Die Kenntnis der Lage der Drehachse bezüglich der Radoberfläche dient für nachfolgende Messschritte (z.B. Einstellarbeiten) zur Bestimmung der Lage der Drehachse im globalen Koordinatensystem; dies ist die so genannte Felgenschlagkompensation.

Die von der Projektionseinrichtung 11 auf das Rad 2 und gegebenenfalls die Karosserie 3 projizierte Struktur kann ein regelmäßiges oder unregelmäßiges Punktemuster, ein Linien- oder Streifenmuster, ein Zufallsmuster oder eine Kombination aus diesen Strukturen sein. Verschiedene Alternativen der Beleuchtung zur Erzeugung des Lichtmusters 15 sind eine Beleuchtung mit Laser und speziellen Projektionsoptiken (klassische Optiken oder Interferenzoptiken), Beleuchtung mit spezieller Projektionsoptik und Dia oder Beleuchtung mit Beamer-Projektionssystemen (z.B. Beleuchtung mit DLP-Chip und Projektionsoptik). Ein Auswerterechner in der Steuereinrichtung 14 hat die Aufgabe der Auswertung der Bilddaten und im allgemeinen auch die Ansteuerung der Beleuchtungseinheit bzw. Projektors.

Eine Stereo-Kalibrierung der bildgebenden Sensoreinheiten 12, insbesondere also des Kamerasystems, und die Berechnung der 3D-Punktwolke 20 sind an sich bekannt, wozu beispielsweise auf die eingangs genannte DE 10 2005 017 624.0 hingewiesen sei, wobei die Berechnung der 3D-Punktwolke dort allerdings zur Ermittlung von Rad- und Karosseriemerkmalen herangezogen wird. Die Muster erlauben eine hochgenaue Korrespondenzzuordnung von Messpunkten im linken und rechten Kamerabild (vgl. Fig. 2). Aus der bekannten Stereokorrespondenz und Kalibrierdaten werden anschließend die 3D-Koordinaten des jeweiligen Messpunktes errechnet (vgl. Fig. 3).

Um aus der 3D-Punktwolke die Ausrichtung des Rades 2 im Raum, die Radachse, bestimmen zu können, wird ein geeignetes Oberflächenmodell in die Punktwolke 20 eingepasst und dessen Orientierung bestimmt. Hierfür werden ebenfalls an sich bekannte Verfahren herangezogen , z.B. gemäß Lowe D.G. "Fitting parameterized 3D Models to images" IEEE Trans. On pattern Analysis and Machine Intelligence 13(5), S. 441-450, 1991 oder gemäß Kölzow T., Krüger L.; "Matching of 3D Model into a 2D Image Using a Hypothesize and Test Alignment Method", Proceedings of SPIE 47th Annual Symposium, 2002. Um die Messergebnisse zu verfeinern, kann insbesondere bei starker Abweichung der Radform vom verwendeten Modell zusätzlich ein Verfahren zur Formkompensation über deformierbare Modelle eingesetzt werden, z.B. gemäß Cootes, T.F., Edwards G.J., Taylor C.J., 1998, "Active Appearance Models", Proc. European Conf. On Computer Vision", Vol. 2, Springer, p 484-498.

Als Lichtmuster kann also z.B. ein engmaschiges Laserpunktemuster auf den Reifen projiziert werden, wie in Fig. 2 dargestellt. Für jeden Laserpunkt wird die Tiefe aus den Verschiebungsvektoren (Disparität) der beiden Stereobilder zur Erhöhung der Genauigkeit bzw. Robustheit berechnet. Damit ergibt sich eine 3D-Punktwolke 20 des vorderen sichtbaren Bereichs des Rades 2. Die Stützpunkte sind nicht eindeutig Referenzpunkten auf der Radoberfläche zugeordnet, sondern wandern auf dieser bei Verstellung oder Bewegung des Rades 2. In die vollständige 3D-Punktwolke 20 wird dann ein Radmodell, beispielsweise ein Zylinder oder idealisiertes Rad, eingepasst (gefittet). Dies kann mit einfacheren 3D-Matching-Verfahren oder aber auch komplexeren Verfahren, wie z.B. mit der verallgemeinerten Hough-Transformation realisiert werden, wie z.B. an sich in D.H. Ballard, "Generalizing the Hough Transform to detect arbitrary shapes", Pattern Recognition, Vol. 13, No. 2, S.111-122, 1981 oder in Ashok Samal and Jodi Edwards, "Generalised Hough Transform", LME 2, 1998 angegeben. Dabei können neben Oberflächen- bzw. Kantenmerkmalen auch weitere Merkmale wie Hell-Dunkel-Übergänge und Grob-Fein-Matching-Strategien mit grober und feiner Hough-Akkumulator-Quantisierung verwendet werden. Eine Hough-Zylinder-Transformation, wobei die Akkumulator-Zelle als Parameter Zylinderkoordinaten aufweist, kann in diesem Zusammenhang Vorteile in Robustheit und Rechenzeit bieten.

Falls wegen stärkerer topologischer Abweichungen (Deformation) von Modell und aktuellem Rad-Objekt erforderlich, kann auch ein sogenanntes Active Shape Model (ASM) mit dem sogenannten Point-Distribution Model (PDM) von Cootes, Hill, Taylor und Haslam (Cootes T.F., Hill.A., Taylor C.J., Haslam J., 1994, "The Use of Active Shape Models for Locating Structures in Medical Image"; Image and Vision Computing Vol. 12-6, p. 355-366) zur Beschreibung einer ungeordneten 3D-Punktwolke 20 im X, Y, Z-Raum verwendet werden. Mit dem ASM & PDM-Verfahren kann der Rang der idealisierten Radmodelle als 3D-Punktwolke 20 über die Deformation der Eigenwertmatrizen beschrieben werden und somit das deformierte Modell optimal an das Rad 2 angepasst werden. Aus der Lage des in die 3D-Punktwolke 20 eingepassten Radmodells kann der Normalenvektor 22 des Rades bestimmt werden. Der Normalenvektor entspricht jedoch nicht dem eigentlichen Drehachsvektor 24.

Der Drehachsvektor 24 wird unter Vorbeifahrt des Fahrzeugs an der Messeinrichtung 10 bestimmt. Hierbei werden für mehrere Radpositionen die korrespondierenden Radachsen berechnet (vgl. Fig. 5). Zusätzlich werden die räumlichen Positionen der Radmittelpunkte bestimmt. Um letztlich die Drehachse des Rades 2 zu berechnen , werden sämtliche Radmittelpunkte und die zugehörigen Radachsen in ein gemeinsames Zentrum geschoben. Im einfachsten Fall liegt eine lineare Translation der Radmittelpunkte vor (vgl. Fig. 6), wodurch das Verschieben ineinander vereinfacht wird.

Bei realer Bewegung des Fahrzeugs 1 treten zusätzlich Nick-, Wank-, Gier-, und Federbewegungen des Fahrzeugs 1 auf. Dann kann nicht mehr von einer linearen Bewegung ausgegangen werden. Die Bewegung des Fahrzeugs wird dreidimensional erfasst, z.B. über die Bewegung der Karosserie 3. Das von den ineinander geschobenen Radachsen aufgespannte Volumen gleicht einem Kegel, wie Fig. 4 zeigt, dessen Symmetrieachse der Drehachse des Rades 2 entspricht. Um die Drehachse zu bestimmen, können die Parameter eines Kegelmodells über einen Fitting-Ansatz ermittelt werden, der sämtliche Radachsen als Messgrößen berücksichtigt, wie ebenfalls aus Fig. 4 ersichtlich.

Ein Vorteil dieses Verfahrens ist, dass die Rotationswinkel zwischen den Radpositionen nicht bekannt sein müssen, um die Drehachse zu bestimmen. Es müssen also keine markanten Merkmale auf dem Rad erkannt, zugeordnet und verfolgt werden. Auch werden die erheblichen Probleme der mangelnden Robustheit in der Erkennungsleistung von Oberflächenmerkmalen des Rades vermieden. Ist die Drehachse bekannt, so kann für nachfolgende Messungen der Radachsen und letztlich der Achsgeometrie der Felgenschlag kompensiert werden.

In der Vorbeifahrt wird für jede Stereobildaufnahme der zeitlichen Bildsequenz der Normalenvektor des Rades bestimmt mit dem Radmittelpunkt als Ausgangspunkt und der Einheitslänge 1. Der Radmittelpunkt entspricht dem Ort des eingepassten 3D-Modellmittelpunkts. Mit Verfahren wie Kalman-Filter (s. Kalman R.E., "A New Approach to Linear Filtering and Prediction Problems", Journal of Basic Engineering (ASME) Vol. 82D, März 1960, 35-45) kann das Rad als 3D-Objekt in der Vorbeifahrt verfolgt und der Geschwindigkeitsvektor v (und Richtungsvektor) bestimmt werden.

Wie aus Fig. 6 ersichtlich, bewegen sich die Normalenvektoren 22 auf einer spiralförmigen Bahn 25 um den Drehachsvektor 24. Die Ursprungspunkte der Normalenvektoren 22 bewegen sich auf der Trajektorie 27. Die Trajektorie kann auch eine Kurve sein und muss nicht parallel zur Sensorikachse der beiden Kameras verlaufen.

Die Radzentren müssen nicht auf der Drehachse liegen. Das Rad hat dann einen Höhenschlag. Eine Korrektur über eine Verschiebung, d.h. eine Bestimmung der Strecke Δs kann z.B. erfolgen über die Erfassung der Bewegungen der Karosserie oder über Annahmen zur Karosseriebewegung (glatte, geradlinige Bewegung). Es ergeben sich Kreise 26 im Raum. Die Drehachse ist dann der Normalenvektor des sich ergebenden Kreises. Radzentrum 28 und Radnormalenvektor 22 ergeben bei der räumlichen Bewegung einen Kegelstumpf im Raum.

Zusätzlich, aber nicht notwendigerweise, lässt sich die Drehfrequenz und damit der Drehwinkel aus dem Geschwindigkeitsvektor v und dem Radius des segmentierten Radobjektes ermitteln. Aus den so berechneten Drehwinkeln lässt sich gegebenenfalls die Genauigkeit der Positionsbestimmung der entsprechenden Normalenvektoren erhöhen.

Aus dem in der Bewegung ermittelten Drehachsvektor 24 und dem Messwert des Normalenvektors, welcher am ruhenden Rad mit höherer Genauigkeit (da ohne Bewegungsunschärfe) auf einer Hebebühne bestimmt werden kann, kann der Sturz- und der Spurwinkel berechnet werden.

Ein Vorteil des beschriebenen Verfahrens ist auch, dass nicht aus Merkmalen in kontrastarmen 2D-Grauwertbildern der Radoberfläche der Raddrehwinkel bestimmt werden muss. Vielmehr lassen sich alleine die robusten 3D-Punktwolken, die aus den Lichtmustern 15, welche sich nicht mit dem Rad mitdrehen, bestimmt wurden, zur Sturz- und Spurwinkelberechnung heranziehen.

Damit wird eine aufwändige und sehr von der Oberfläche des Rades abhängige Detektion von Referenzpunkten, die auf der Radoberfläche als Strukturen in 2D-Grauwertbildern erkannt werden müssen, entbehrlich. Vielmehr lässt sich die Aufgabe mit stabilen 3D-Messdaten für die modellgestützte 3D-Anpassung lösen, die sich unabhängig von den Oberflächenstrukturen auf der Radoberfläche je nach Winkeleinschlag bewegen. Die Daten können Online aufgenommen und danach Offline ausgewertet werden. Mit entsprechenden Prozessoren können die Algorithmen hardwareseitig beschleunigt werden.

Prinzipiell ist die Erfassung eines Drehwinkels anhand eines festen Merkmals, wie z.B. Ventils, nicht erforderlich, sondern kann zusätzlich zur Erhöhung der Messgenauigkeit herangezogen werden. Der Drehwinkel kann aus der Lage des Normalenvektors auf der betreffenden Spiralbahn (Zykloide) bzw. nach Rückrechnung mitbestimmt werden.

## Patentansprüche

1. Verfahren zum Ermitteln der Drehachse eines Fahrzeugrades (2), bei dem während der Drehung des Rades (2) ein Lichtmuster (15) zumindest auf das Rad (2) projiziert und das von dem Rad (2) reflektierte Lichtmuster (15', 15") von einer kalibrierten bildgebenden Sensorik aufgenommen und in einer Auswerteeinrichtung ausgewertet wird,
**dadurch gekennzeichnet,**
**dass** bei der Auswertung eine radbezogene 3D-Punktwolke (20) bestimmt und an diese ein parametrisches Oberflächenmodell des Rades (2) angepasst wird,
**dass** zum Erhalten der Radachsen (22) Radnormalenvektoren für verschiedene Drehlagen des Rades (2) berechnet werden und
**dass** aus der räumlichen Bewegung des Radnormalenvektors (22) der Drehachsvektor als Drehachse (24) berechnet wird.

2. Verfahren nach Anspruch 1
**dadurch gekennzeichnet,**
**dass** das reflektierte Lichtmuster (15', 15") mittels eines Mono-, Stereo- oder Mehrkamerasystems der bildgebenden Sensorik aufgenommen wird und
**dass** bei Stereo-Aufnahme eine Korrespondenzzuordnung von mit den beiden Kamerabildern erhaltenen Messpunkten erfolgt und aus der Stereokorrespondenz und den Kalibrierdaten die 3D-Koordianten des jeweiligen Messpunktes errechnet werden.

3. Verfahren nach Anspruch 1 oder 2,
**dadurch gekennzeichnet,**
**dass** als Oberflächenmodell zur Formkompensation ein deformierbares Modell für die Anpassung zugrunde gelegt wird.

4. Verfahren nach einem der vorhergehenden Ansprüche,
**dadurch gekennzeichnet,**
**dass** die Projektion des Lichtmusters (15) und die Aufnahme durch die bildgebende Sensorik während der Vorbeifahrt des Fahrzeuges erfolgen.

5. Verfahren nach Anspruch 4,
**dadurch gekennzeichnet,**
**dass** für mehrere Radpositionen die korrespondierenden Radachsen (22) berechnet und zusätzlich die räumlichen Positionen der Radmittelpunkte bestimmt werden,
**dass** die Radmittelpunkte und die zugehörigen Radachsen (22) in ein gemeinsames Zentrum verschoben werden und
**dass** die Drehachse als Achse des entstehenden Kegelstumpfes identifiziert wird.

6. Verfahren nach Anspruch 4 oder 5,
**dadurch gekennzeichnet,**
**dass** die Bewegung des Fahrzeuges während der Vorbeifahrt durch Erfassen der Bewegung der Karosserie dreidimensional bestimmt wird.

7. Verfahren nach einem der Ansprüche 4 bis 6,
**dadurch gekennzeichnet,**
**dass** durch die Vorbeifahrt entstehende Translationsverschiebungen der Radnormalenvektoren aus der Bewegungsrichtung und Geschwindigkeit der angepassten 3D-Punktwolken für jedes aufgenommene Bild bestimmt werden,
**dass** die Spiralengänge der Radnormalenvektoren unter Herausrechnen der Translationsverschiebungen in sich zu einer umlaufenden Kurve zusammengeschoben werden und
**dass** als Drehachsenvektor der Normalenvektor zu der von der umlaufenden Kurve umschriebenen ebenen Fläche durch deren Mittelpunkt ermittelt wird.

8. Verfahren nach Anspruch 7,
**dadurch gekennzeichnet,**
**dass** zur Erhöhung der Genauigkeit der Positionsbestimmung der betreffenden Radnormalenvektoren die Drehfrequenz und daraus der Drehwinkel aus dem Geschwindigkeitsvektor und dem Radius eines zugehörigen segmentierten Radobjektes bestimmt wird.

9. Verfahren nach einem der vorhergehenden Ansprüche,
**dadurch gekennzeichnet,**
**dass** aus dem bei der Bewegung des Rades (2) und gegebenenfalls Fahrzeugs ermittelten Drehachsenvektor und einem am ruhenden Rad gewonnenen Messwert des Radnormalenvektors Spur- und Sturzwinkel berechnet werden.

10. Verfahren nach einem der vorhergehenden Ansprüche,
**dadurch gekennzeichnet,**
**dass** als Oberflächenmodell zum Einpassen in die Punktwolke ein Zylinder oder idealisiertes Rad zugrunde gelegt wird.

11. Verfahren nach einem der vorhergehenden Ansprüche 1 bis 3,
**dadurch gekennzeichnet,**
**dass** eine Drehwinkelbestimmung aus der Oberflächentextur bei unstrukturierter Beleuchtung erfolgt.

## Claims

1. Method for determining the axis of rotation of a vehicle wheel (2), in the case of which during the rotation of the wheel (2) a light pattern (15) is projected at least onto the wheel (2), and the light pattern (15', 15'') reflected by the wheel (2) is picked up by a calibrated imaging sensor system and evaluated in an evaluation device, **characterized in that** during the evaluation a wheel-related 3D point cloud (20) is determined and a parametric surface model of the wheel (2) is matched thereto, **in that** in order to obtain the wheel axes (22) wheel normal vectors are calculated for various rotation positions of the wheel (2), and **in that** the axis of the rotation vector is calculated as axis of rotation (24) from the spatial movement of the wheel normal vector (22).

2. Method according to Claim 1, **characterized in that** the reflected light pattern (15', 15") is recorded by means of a mono camera system, stereo camera system or mutlicamera system of the imaging sensor system, and **in that** in the case of stereo recording a correspondence assignment of measuring points obtained with the two camera images takes place, and the 3D coordinates of the respective measuring point are calculated from the stereo correspondence and the calibration data.

3. Method according to either of Claims 1 and 2, **characterized in that** the surface model for shape compensation is based on a deformable matching model.

4. Method according to one of the preceding claims, **characterized in that** the projection of the light pattern (15) and the recording by the imaging sensor system take place as the vehicle passes by.

5. Method according to Claim 4, **characterized in that** the corresponding wheel axes (22) are calculated for a plurality of wheel positions and, in addition, the spatial positions of the wheel centre points are determined, **in that** the wheel centre points and the associated wheel axes (22) are displaced into a common centre, and **in that** the axis of rotation is identified as axis of the resulting conical frustum.

6. Method according to Claim 4 or 5, **characterized in that** the movement of the vehicle as it passes by is determined by detecting the movement of the body in three dimensions.

7. Method according to one of Claims 4 to 6, **characterized in that** translation displacements of the wheel normal vectors which result from the driving past are determined from the direction of movement and speed of the matched 3D point clouds for each recorded image, **in that** the spiral paths of the wheel normal vectors are pushed together into one another to form a revolving curve by calculating the translation displacements, and **in that** the normal vector to the plane surface circumscribed by the revolving curve through the centre point of said surface is determined as axis of rotation vector.

8. Method according to Claim 7, **characterized in that** in order to improve the accuracy of the position determination of the relevant wheel normal vectors the rotational frequency, and therefore the angle of rotation is determined from the velocity vector and the radius of an associated segmented wheel object.

9. Method according to one of the preceding claims, **characterized in that** trail and camber angles are calculated from the axis of rotation vector determined during movement of the wheel (2) and, if appropriate, vehicle, and from a measured value of the wheel normal vector obtained on the resting wheel.

10. Method according to one of the preceding claims, **characterized in that** the surface model for fitting into the point cloud is based on a cylinder or idealized wheel.

11. Method according to one of the preceding Claims 1 to 3, **characterized in that** the angle of rotation is determined from the surface texture in the case of unstructured illumination.

## Revendications

1. Procédé de détermination de l'axe de rotation d'une roue (2) d'un véhicule, dans lequel un motif lumineux (15) est projeté au moins sur la roue (2) pendant la rotation de la roue (2) et le motif lumineux (15', 15") réfléchi par la roue (2) est enregistré par un ensemble étalonné de détecteurs de formation d'image et est évalué dans un dispositif d'évaluation,
**caractérisé en ce que**
lors de l'évaluation, un nuage (20) en 3D de points rapportés à la roue est déterminé et un modèle paramétrique de surface de la roue (2) y est adapté,
**en ce que** pour obtenir l'axe (22) de la roue, les vecteurs normaux à la roue sont calculés pour différentes positions en rotation de la roue (2) et
**en ce que** le vecteur d'axe de rotation est calculé comme axe de rotation (24) à partir du déplacement spatial du vecteur (22) normal à la roue.

2. Procédé selon la revendication 1, **caractérisé en ce que** le motif lumineux (15', 15") réfléchi est enregistré au moyen d'un système mono, stéréo ou multiple de caméras de l'ensemble de détecteurs de formation d'image, **en ce que** dans le cas d'un enregistrement stéréo, une correspondance entre les points de mesure obtenus par les deux images de caméra est calculée et **en ce que** les coordonnées en 3D du point de mesure concerné sont calculées à partir de la correspondance stéréo et des données d'étalonnage.

3. Procédé selon les revendications 1 ou 2, **caractérisé en ce que** comme modèle de surface pour la compensation de la forme, on se base sur un modèle déformable pour l'adaptation.

4. Procédé selon l'une des revendications précédentes, **caractérisé en ce que** la projection du motif lumineux (15) et l'enregistrement par l'ensemble de détecteurs de formation d'image ont lieu pendant que le véhicule passe devant le système.

5. Procédé selon la revendication 4, **caractérisé en ce que** pour plusieurs positions de roue, les axes de roue correspondants (22) sont calculés et la position spatiale des points centraux des roues est en outre déterminée, **en ce que** les points centraux et les axes de roue (22) associés sont déplacés en un centre commun et **en ce que** l'axe de rotation est identifié comme étant l'axe du tronc de cône ainsi obtenu.

6. Procédé selon les revendications 4 ou 5, **caractérisé en ce que** le déplacement du véhicule pendant son passage devant le système est déterminé par saisie en trois dimensions du déplacement de la carrosserie.

7. Procédé selon l'une des revendications 4 à 6, **caractérisé en ce que** les déplacements de translation des vecteurs normaux aux roues qui résultent du passage du véhicule devant le système sont déterminés à partir de la direction du déplacement et de la vitesse des nuages en 3D de points adaptés pour chaque image enregistrée, **en ce que** les trajectoires en spirale des vecteurs normaux aux roues sont rassemblées en une courbe périphérique en étant extraites des déplacements de translation et **en ce que** comme vecteur d'axe de rotation, on détermine le vecteur normal de la surface plane circonscrite par la courbe périphérique au point central de cette surface.

8. Procédé selon la revendication 7, **caractérisé en ce que** pour augmenter la précision de la détermination de la position des vecteurs normaux aux roues concernées, la fréquence de rotation et de là l'angle de rotation sont déterminés à partir du vecteur de vitesse et du rayon d'un objet segmenté de roue associé.

9. Procédé selon l'une des revendications précédentes, **caractérisé en ce que** l'angle de pincement et l'angle de piqué sont calculés à partir du vecteur d'axe de rotation déterminé à partir du déplacement de la roue (2) et éventuellement du véhicule ainsi que d'une valeur de mesure du vecteur normal à la roue, obtenue sur la roue immobile.

10. Procédé selon l'une quelconques de revendications précédentes, **caractérisé en ce que** comme modèle de surface pour l'adaptation dans le nuage de points, on se base sur un cylindre ou sur une roue idéale.

11. Procédé selon l'une des revendications 1 à 3 qui précèdent, **caractérisé en ce qu'**en cas d'éclairage non structuré, la détermination de l'angle de rotation s'effectue à partir de la texture de surface.
